# EUROPEAN PATENT APPLICATION

(11) **EP 3 016 186 A1**
(43) Date of publication of application: **04.05.2016**
(21) Application number: 14003692.2
(22) Date of filing: 31.10.2014
(51) Int. Cl.: H01M 4/62, H01G 11/30, H01M 4/86

(54) **Use of a poly(ionic liquid) as a binder material for electrodes in electrochemical devices**

(71) Applicant: Max-Planck-Gesellschaft zur Förderung der Wissenschaften e.V., 80539 München (DE)
(72) Inventor: Antonietti, Markus, 14558 Nuthetal OT Rehbrücke (DE); Yuan, Jiajin, 14469 Potsdam (DE); Fechler, Nina, 10119 Berlin (DE)
(74) Representative: v. Bezold & Partner Patentanwälte - PartG mbB

(57) **Abstract**

The present invention relates to the use of a non-particulate poly(ionic liquid) (PIL) polymer as a binder material for electrodes in electrochemical devices. The electrochemical device may be for example a battery, supercapacitor or a fuel cell.

Preferably, the poly(ionic liquid) polymer comprises an imidazolium, pyridinium or thiazolium polycation.

The non-particulate PIL polymer is molecularly dissolved in a suitable solvent.

An further aspect of the invention relates to electrodes for electrochemical devices comprising a non-particulate poly(ionic liquid) polymer as defined above as a binder material. In particular, the electrochemical device is selected from the group comprising batteries, supercapacitors, and fuel cells.

## Description

### Background of the invention

Electrochemical energy storage/conversion devices, such as batteries, fuel cells, and supercapacitors are regularly based on powderous electrochemically active materials, but also use conductive additives such as carbon powders to increase the conductivity of the electrodes and to achieve improved electrochemical performances. To satisfy the desired geometry, the electrode material and the conductive additives are homogeneously mixed and brought together by binder-polymers for the electrode preparation.

The impact of polymer binders on the overall behaviour of the complete electrode system, particularly with regard to its mechanical properties and interactions with electrolytes and other active components, is highly relevant for the cycling stability (Science 2011, 334, 75-79; ACS Appl. Mater. Interfaces 2013, 5, 7299-7307). So far, only few literature reports address this issue. It has been revealed recently that the polymer binder itself has the potential to tremendously improve the performance of the electrochemical devices. This is because electrodes consist of electrochemically active electrode powder materials, conductive additives, and binders. And here, binders act as an important component to stick together the electrode materials and to form a good electron path (and other transport paths) to obtain better electrochemical properties, and in the same time, to compose a robust and flexible electrode for a stable cycling property. Functionality, polarity, viscosity, flexibility, and in some cases conductivity appear to be the crucial factors. For example, the viscosity of the polymer binder solutions is known to strongly affect both the processing and drying behaviour of electrode slurries and the resulting electrode morphology. Recently, several studies suggest that poly(vinylidene fluoride) (PVDF), which is standard choice and for instance applied to commercially available lithium-ion batteries, is not the most appropriate binder for electrodes. Thus, there is strong demand for more functional and efficient binders and the pursuit for such binders is ongoing and in the focus of many research groups.

Poly(ionic liquid)s (PILs) are ionic polymers prepared from monomeric ionic liquids. They have found a bunch of applications in various fields from heterophase catalysis to gas separation. Because of the broad electrochemical window of the ionic liquid species, PILs can in principle withstand high operation voltage in electrochemical energy storage/conversion devices. PILs have also been used as dispersants and stabilizing agents for graphene (US 2012/0256138 A1). To the inventors' knowledge, however, only once vinylimidazolium-based crosslinked PIL copolymer nanoparticles of 40 nm have been applied as binder for a lithium ion battery to deliver better cycling stability than PVDF (J. Power Source, 2013, 240, 745-752). These early observations, however, due to a conceptual misunderstanding of the role and the operation mode of a binder being mainly a steric spacer, strictly reduce themselves to PIL-based nanoparticles. Moreover, the use of these nanoparticles still resulted in insufficient properties of the corresponding electrodes and batteries.

Thus, main objects of the present invention are to provide novel and improved binders for electrodes in electrochemical devices as well as to provide electrochemical devices, such as batteries, supercapacitors and fuel cells, comprising the same.

These objects are achieved according to the present invention by providing the use of a non-particulate poly(ionic liquid) polymer (homopolymer or copolymer) as a binder material for electrodes in electrochemical devices, and by providing the electrodes prepared by using said binder material and electrochemical devices comprising said electrodes.

### Description of the invention

The present invention is based on the surprising finding that poly(ionic liquid) (PIL) polymers which are not part of a polymer particle, such as a microparticle or nanoparticle, but rather present as individual molecules, e.g., molecularly dissolved in a suitable solvent, are excellent and highly efficient binders for electrodes in various electrochemical devices, in particular within lithium ion batteries, as fuel cell electrodes, and in supercapacitors. The experimental data provided below demonstrate that these PIL binders enhance the electrode performance in terms of capacity as well as cycling speed and cycling stability.

Principally, the PIL polymer used herein is not especially limited and may be any PIL polymer known in the art. The PIL polymer may be a homopolymer or copolymer, and preferably is a homopolymer.

Generally, the PIL (homo)polymers comprise a main polymer chain composed of a plurality of repeating units having at least one cation, preferably an organic cation, in each repeating unit. The main polymer chain may be based on, e.g. poly(meth)acrylate, polystyrene, poly(1-vinylimidazolium), polynorbonyl, or any other organic polymer chain known in the art.

The preferably organic cation may be selected from the group comprising a pyridinium, pyridazinium, pyrimidinium, pyrazinium, imidazolium, pyrazolium, thiazolium, oxazolium, triazolium, phosphonium or ammonium cation.

In particular, the (homo)polymer may comprise an ammonium, imidazolium, pyridinium or thiazolium polycation.

More specifically, suitable (homo)polymers may be found in the classes of vinylalkylimidazolium, vinylalkylthiazolium, vinylalkylpyridinium, or diallyldialkylammonium polymers.

Typically, the (homo)polymers and repeating units (monomers) constituting the same are alkyl-substituted with alkyl chain length in the range from methyl to hexyl, preferably from methyl to butyl.

Typically, the polymer, in particular homopolymer, comprises 3 or more, preferably 6 or more repeating units, such as 3-1000 units, 5-1000 units, 6-1000 units, 10-1000 units, preferably 6-500 or 10-500 units, more preferred 6-300 or 10-300 repeating units. For reasons of convenience, the term "(homo)polymer" is used herein in a broad sense and also comprises molecules having less than 10 repeating units, which are often referred to as "oligomers" in the art.

The homopolymer may be linear, branched or hyperbranched, and preferably is linear or slightly branched, more preferred linear.

In one embodiment of the invention, the PIL polymer is a copolymer, wherein at least the majority of the repeating units represents a repeating unit as defined for a PIL homopolymer above or is derived therefrom. More specifically, at least 60%, 70%, 80%, 90%, 95% or 100% of the repeating units represent or are derived from a repeating unit as defined for a PIL homopolymer above.

The PIL copolymer may be a statistical copolymer or a block-copolymer. In the latter case, the copolymer may comprise (macromonomer) blocks of one or more homopolymers as defined above, wherein the length and composition of the blocks may be the same or different from each other. Typically, the length of the blocks will be in the range from 3 to 1000, preferably from 6 to 300 repeating units.

Further, the PIL copolymer may comprise repeating units of monomers or macromonomers which are capable to polymerize with the PIL monomers or macromonomers but which do not include an organic cation as mentioned above, typically selected from the group comprising (meth)acrylates, styrenes, vinyls, (poly)norbonyl, etc.

Typically, the PIL polymers have an average molecular weight Mn in the range from 2000 to 500,000 g/mol, preferably from 4000 to 200,000 g/mol.

The counter anion(s) for these polycationic polymers also is/are not especially limited and in particular may be any anion(s) used in the conducting salt of an electrochemical device, e.g. hexafluorophosphate, bis(trifluoromethanesulfonyl)imide (TFSI) and bis(perfluoroethylsulfonyl)imide.

In a preferred embodiment of the invention, the poly(ionic liquid) (PIL) (homo)polymer comprises bis(trifluoromethanesulfonyl)imide (TFSI).

Specific, but not limiting examples of the polymer are poly(1-ethyl-3-vinylimidazolium TFSI), poly[1-(4-vinylbenzyl)-3-methyl-imidazolium TFSI], and poly(4-methyl-3-(4-vinylbenzyl)thiazol-3-ium TFSI).

The term "molecularly dissolved" as used herein means that the polymer chains are dissolved as individual molecules in the respective solvent (as evidenced by dynamic light scattering) and form a homogenous phase, contrary to the two-phase system formed by nanoparticles.

The solvent is not especially limited and may be any solvent, preferably any protic or aprotic organic solvent which is capable to dissolve the respective polymer.

More specifically, the solvent is selected from the group comprising acetonitrile, acetone, tetrahydrofuran, N,N-dimethyl formaldehyde, dimethylsulfoxide, chloroform, ethyl acetate, pyridine, methanol, ethanol, and mixtures thereof.

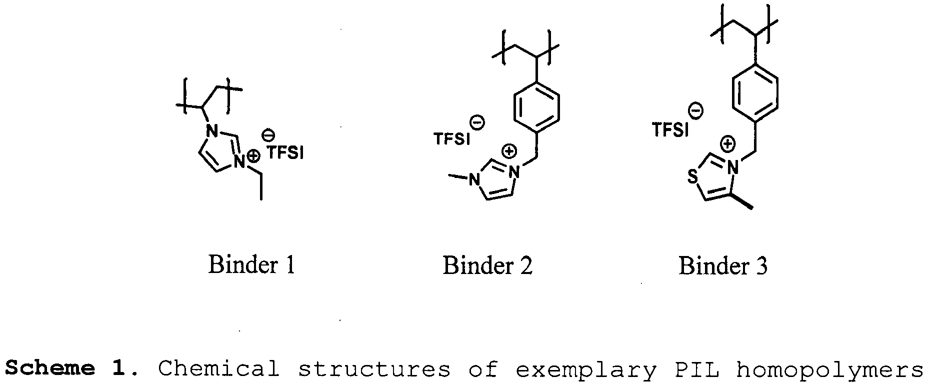

Scheme 1 shows the chemical structures of some exemplary PIL homopolymers based on imidazolium and thiazolium ionic liquid monomers. They were synthesized via anion exchange reaction between bis(trifluoromethanesulfonyl)imide lithium salt and the corresponding PILs with Br anions in aqueous solution. The PILs with Br anions were directly prepared via the conventional free radical polymerization of the ionic liquid monomers at 90 °C in water or DMF, for the branched species with minor amounts of cross-linking agent to avoid macroscopic or particle like gelation. The obtained PIL polymers appear as white or light yellow powder.

Other PIL polymers can be prepared from given starting compounds by analogous reactions and, where appropriate, modifications thereof.

As already mentioned above, the poly(ionic liquid) binder according to the present invention can be advantageously used in various applications involving electrochemical devices such as batteries, in particular metal batteries, more particular Li ion batteries, supercapacitors, and fuel cells.

The term "a binder material for electrodes in electrochemical devices" as used herein generally means a material which binds powders of known inorganic electrochemically active energy storage/conversion materials and usually also conductive additives, e.g. carbons, together to form a coherent and mechanically stable electrode material of a desired shape. Thus, the binder material essentially binds all particulate components of the electrode material or electrodes together.

The electrode material bound together by the PIL binder of the invention may be principally any electrode material used in electrochemical devices as indicated above. Typically, the electrode material bonded by the PIL binder of the invention comprises electrochemically active materials, such as LiCoO₂, LiNiO₂, LiMnO₂, Li(NiₓCo_{y}Mn_{z})O₂, and LiFePO₄, as well as conductive materials, such as conductive carbons.

The term "electrochemically active material" as used herein generally denotes a material which participates or is capable to participate in electrochemical reactions, in particular those electrochemical reactions which are utilized for storage or conversion of energy in an electrochemical device as defined above. A wide variety of such materials are known and used in the art.

In the final electrode or electrode material prepared by using the PIL polymer binder material as defined above, the PIL binding polymer is still present in a non-particulate form but essentially free from the solvent used for dissolving the PIL polymer in the initial liquid binder material.

In a more specific embodiment of the invention, the electrode material bound together by the PIL binder of the invention further comprises carbon powder as a conductive additive.

Typically the electrode material comprises the PIL binder in an amount from 0.5 to 20 weight %, preferably from 1 to 10, more preferred from 2 to 5 weight % (calculated without solvent).

The present invention also relates to a method for preparing such an electrode material for electrochemical devices.

Typically, said method comprises at least the following steps:
- providing a binder material which is a poly(ionic) liquid) polymer dissolved in suitable solvent
- homogenously mixing the binder material with particulate components of the electrode material, including at least one electrochemically active material and, optionally, at least one conducting additive
- optionally forming the homogenous mixture into a desired shape, and
- drying.

A further, closely related aspect of the present invention relates to an electrode for electrochemical devices comprising a poly(ionic liquid) polymer, in particular homopolymer, as defined above as a binding material.

In a more specific embodiment, said electrode further comprises carbon powder as a conductive additive.

Typically, the electrode material of said electrode for electrochemical devices represents a homogenous mixture of at least one electrochemically active material and, optionally, at least one conducting additive and of a poly(ionic liquid) polymer as defined above.

The electrode can be produced by utilizing the poly(ionic liquid) polymer as defined above and performing, e.g., the steps of the method disclosed above.

The present invention further relates to an electrochemical device comprising the electrode as defined above.

More specifically, the electrochemical device of the invention is selected from the group comprising batteries, in particular metal batteries, such as Li ion batteries, supercapacitors, and fuel cells.

### Brief Description of the Figures

**Fig. 1****:** Cycling stability test of electrode based on LiFePO₄ using different types of polymer binders in the lithium ion battery test. The electrodes were made by mixture of high-quality lithium iron phosphate (80 wt.%), conductive additive (Acetylene black; 10 wt.%), and binder (10 wt.%).
**Fig. 2** shows the binding of a commercial Pt/C powder for the electrochemical reduction of oxygen (ORR) with a commercial Nafion binder, in comparison with PIL binders of the invention (all binders: 10 wt%)
**Fig. 3** shows the specific capacitance of a polymer-bound powder in electrochemical supercapacitance measurements in dependence of scan rate, binder type, and in two different standard solvents. All binders: 10 wt%.
**Fig. 4****:** Cycling stability of a nanoparticle binder material of the prior art (Zamory et al., in J. Power Source, 2013, 240, 745-752) tested under the same conditions as the binder material of the invention in Fig. 1.

The following non-limiting examples illustrate the present invention in more detail.

### EXAMPLE 1

### Use of a poly(ionic liquid) binder according to the invention as a binder material for the cathode of a lithium ion battery

Three exemplary poly(ionic liquid) binders corresponding to the basic chemical structures shown in Scheme 1 above were prepared (according to the following references, binder 1: Macromolecules, 2011, 44 (19), 7719-7726, binder 2: a modified method based on Chem. Commun., 2005, 3325-3327, binder 3: Macromolecular Symposia, Special Issue: Polymers and Ionic Liquids, 2014, 342 (1), 67-77.) as indicated on page 6, last paragraph, of this application and characterized. Binder 1 (poly[1-ethyl-3-vinylimidazolium TFSI]) was found to have a degree of polymerization (DP) of 321 and a polydispersity index (PDI) of 3.43; Binder 2 (poly[1-(4-vinylbenzyl)-3-methyl-imidazolium TFSI]) had a DP of 118 and a PD1 of 3.1; Binder 3 (poly[4-methyl-3-(4-vinylbenzyl)-thiazol-3-ium TFSI]) had a DP of 75 and a PDI of 3.0.

These binders were applied for cathodes in Lithium-Ion Batteries (LIBs) and tested by electrochemical measurements.

The electrodes were made by mixture of high-quality lithium iron phosphate (80 wt.%), conductive additive (Acetylene black; 10 wt.%), and binder (10 wt.%) in acetonitrile. Al foils (diameter of 10 mm) were used as a current collector. 20 µL of cathode mixture in acetonitrile was dropped on Al current collectors, then electrodes were dried first at 60 °C for three hours and next at 120 °C for overnight. The loading mass is ca. 1.5 mg. The electrodes were assembled in the two-electrode Swagelok-type cells in an argon-filled glove box (M Braun) and tested them on a multichannel potentiostatic-galvanostatic system (VMP-3, Bio-Logic). To calculate a current density, 1C as 170 mA/g was used. Further, lithium metal was used as an anode and 1M lithium hexafluorophosphate (LiPF₆) in ethylene carbonate and dimethyl carbonate (volume ratio 1:1) as an electrolyte.

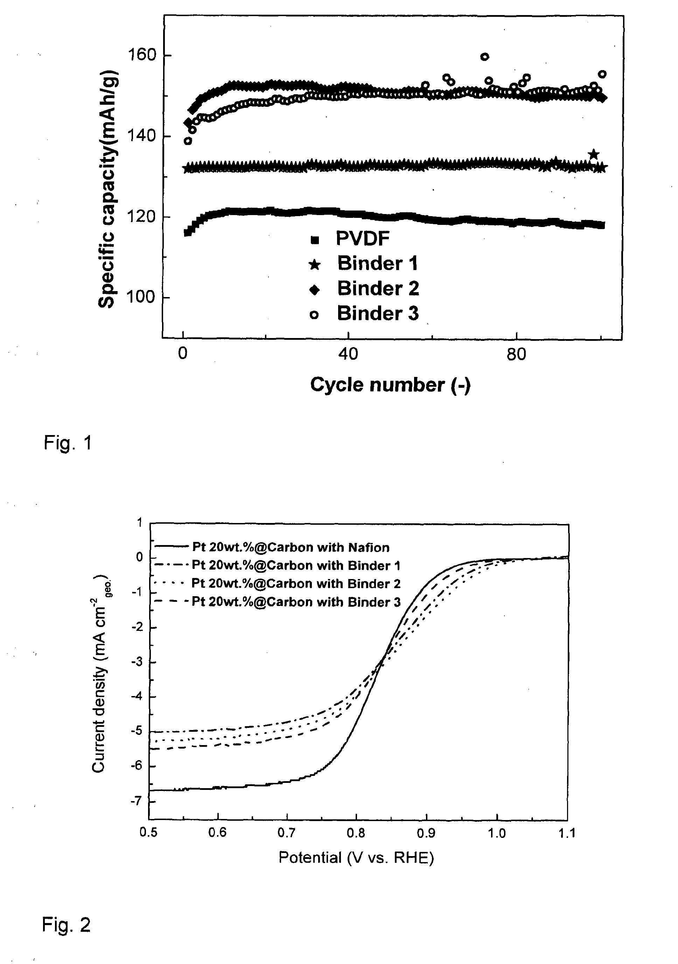

Figure 1 shows the cycling stability of electrodes prepared from the commercial PVDF binder product and the three presented PIL binders. It is clearly observed that the PIL binders show excellent cycling performance, and no clear loss of active material was detected for most than 100 cycles at 1C rate of current density (= 170 mA/g). The inventors attribute these favourable properties to the superior conduction behaviour and the oxidation-resistance of PILs at relatively high voltages.

Thus, the cycling stability of cathodes using poly(ionic liquid) binder is as good as that of PVDF for 100 cycles. This demonstrates that the poly(ionic liquid) binder has a high oxidation stability to be used in cathodes in LIBs and good binding properties with carbon additives to form a conductive network in the same time.

Most notably, the electrodes bearing PIL binders even deliver a high specific capacity closer to the theoretical specific capacity of LiFePO₄ (170 mAh/g), higher than that of the commercial PVDF, which is the common binder material up to now, which indicates the formation of better conductive networks with LiFePO₄ and carbon powder due to the function of the PIL binders in order to improve the lithium intercalation/de-intercalation process.

### EXAMPLE 2

### Use of a poly(ionic liquid) binder as a binder material for catalysts for the electrochemical reduction of oxygen (ORR)

The novel binders were also tested in another electrochemical application, namely the binding of powderous catalysts for electrocatalytic applications, in particular a Pt/C mixture for the oxygen reduction reaction.

Figure 2 shows the binding of a commercial Pt/C powder for the electrochemical reduction of oxygen (ORR) with a commercial Nafion binder, in comparison with PIL binders of the invention (all binders: 10 wt%).

It is evident that the 3 PIL binders have a much better onset potential, speaking for lower influence of insulation layers and the coupled contact resistance. It can be further seen that the limiting currents are also lower, speaking for a less free rate access of oxygen, which usually indicates an overdosing of the binder. However, it was intended to compare the binder based on equal relative compositions, not considering different binder efficacies.

### EXAMPLE 3

### Use of the poly(ionic liquid) binders of the invention in supercapacitor applications

The binder materials of the invention were also sent to another laboratory for blind testing of the binder performance (Prof. U. S. Schubert, University of Jena). This lab applied the binder for supercapacitance measurements with nanoporous, powderous carbons in two different solvents, propylene carbonate (PC) and acetonitrile (ACN).

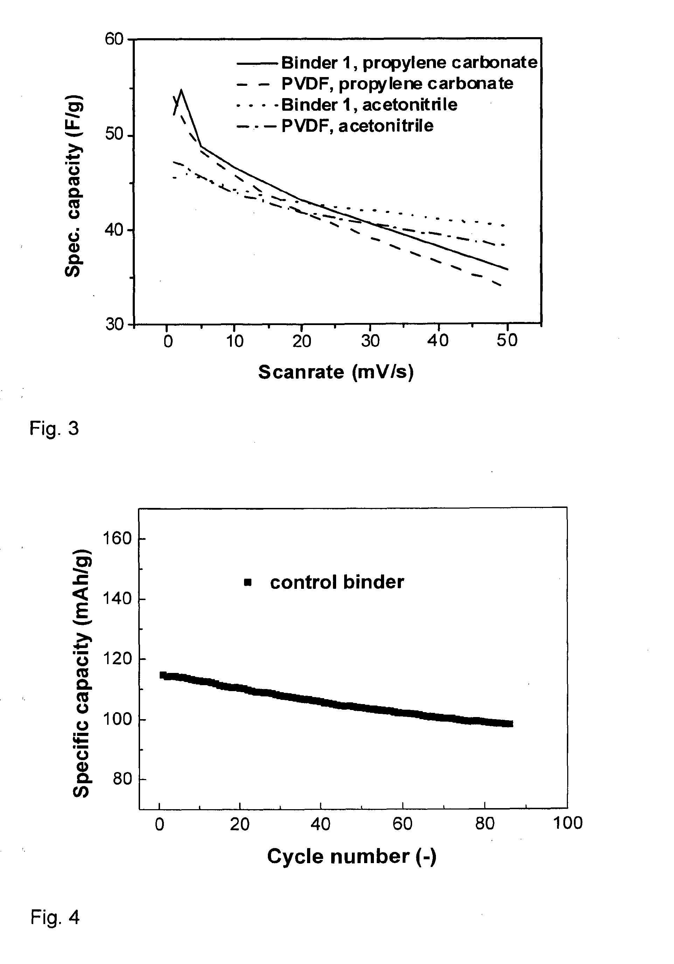

The data are presented in Figure 3 which shows the specific capacitance of a polymer-bound powder in electrochemical supercapacitance measurements in dependence of scan rate, binder type, and in two different standard solvents. All binders: 10 wt%.

The research partners reported in all variations about an improved rate performance, i.e. the PIL binder supports a resistance-poor contacting of the electroactive particles. The reduced data at very low scan rates again speaks for a reduction of electrochemically active surface area, i.e. the binder spreads too effectively and is potentially overdosed. This is similar to the ORR data, and speaks for a molecular action of the single binder polymers rather than the (less effective) dispersion based operation mode of PVDF.

### COMPARATIVE EXAMPLE

### Cycling stability test of a nanoparticulate binder of the prior art

A nanoparticulate binder material was prepared via the dispersion polymerization of 1-vinyl-3-ethylimidazolium bis(trifluoromethanesulfonyl)imide monomer in water in the presence of an imidazolium-based ionic liquid crosslinker, as described by Zamory et al. (in J. Power Source, 2013, 240, 745-752) and tested under the same conditions as described in Example 1 above for the binder materials of the invention.

Fig. 4 demonstrates that this binder of the prior art has a low capacity as well as bad cycle stability, already losing 20% of its capacity after 80 cycles.

## Claims

1. Use of a non-particulate poly(ionic liquid) polymer as a binder material for electrodes in electrochemical devices.

2. The use according to claim 1, wherein the poly(ionic liquid) polymer is linear, slightly branched, or hyperbranched.

3. The use according to claim 1 or 2, wherein the poly (ionic liquid) polymer is a homopolymer.

4. The use according to any one of claims 1 to 3, wherein the poly(ionic liquid) polymer is molecularly dissolved in a suitable solvent.

5. The use according to claim 4, wherein the solvent is selected from the group comprising acetonitrile, acetone, tetrahydrofuran, N,N-dimethyl formaldehyde, dimethylsulfoxide, chloroform, ethyl acetate, pyridine, methanol, ethanol, and mixtures thereof.

6. The use according to any one of claims 1-5, wherein the poly(ionic liquid) polymer comprises an imidazolium, pyridinium or thiazolium polycation.

7. The use according to any one of claims 1-6, wherein the poly(ionic liquid) polymer comprises anions of hexafluorophosphate, bis(trifluoromethanesulfonyl)imide (TFSI) or bis(perfluoroethylsulfonyl)imide.

8. The use according to any one of claims 1-7, wherein the poly(ionic liquid) polymer comprises imidazolium or thiazolium polycations, in particular is selected from poly(1-ethyl-3-vinylimidazolium TFSI), poly[1-(4-vinylbenzyl)-3-methylimidazolium TFSI], and poly(4-methyl-3-(4-vinylbenzyl)-thiazol-3-ium TFSI).

9. The use according to any one of claims 1-8, wherein the polymer comprises 6 or more, preferably 10 or more, repeating units having at least one, preferably organic, cation in each repeating unit.

10. The use according to any one of claims 1-9, wherein the electrochemical devices comprise batteries, in particular metal batteries, supercapacitors, and fuel cells.

11. A method for preparing an electrode material for electrochemical devices comprising the following steps:
- providing a binder material which is a poly(ionic liquid) polymer dissolved in suitable solvent
- homogenously mixing the binder material with particulate components of the electrode material, including at least one electrochemically active material and, optionally, at least one conducting additive
- optionally forming the homogenous mixture into a desired shape, and
- drying.

12. An electrode for electrochemical devices comprising a non-particulate poly(ionic liquid) polymer as defined in any one of claims 1-3 and 6-9 as a binding material.

13. The electrode according to claim 12 or the use according to any one of claim 1-10, wherein the electrode material of the electrode further comprises carbon powder as a conductive material.

14. The electrode according to claim 12 or 13, wherein the electrode material of the electrode represents a homogenous mixture of at least one electrochemically active material and, optionally, at least one conducting additive and of a poly(ionic liquid) polymer as defined in any one of claims 1-3 and 6-9.

15. The electrode according to any one of claims 12-14, which is produced by utilizing the poly(ionic liquid) polymer as defined in any one of claims 1-9 and performing the steps of the method according to claim 11.

16. An electrochemical device comprising the electrode according to any one of claims 12-15.

17. The electrochemical device according to claim 16, which is selected from the group comprising batteries, in particular metal batteries, supercapacitors, and fuel cells.
